# FASCICULE DE BREVET EUROPEEN

(11) **EP 2 207 843 B1**
(45) Date de publication et mention de la délivrance du brevet: **14.08.2013**
(21) Numéro de dépôt: 08853768.3
(22) Date de dépôt: 10.11.2008
(51) Int. Cl.: C08K 5/04, C08L 101/06, C08L 67/04, C08L 3/00, C08K 5/09, C08K 5/103, C08K 5/11

(54) **UTILISATION D'UN MELANGE CITRATE/LIPIDE COMME PLASTIFIANT DE COMPOSITES BIODEGRADABLES**
VERWENDUNG EINER CITRAT/LIPID-MISCHUNG ALS WEICHMACHER FÜR BIOLOGISCH ABBAUBARE VERBUNDSTOFFE
USE OF A CITRATE/LIPID MIXTURE AS A PLASTICIZER FOR BIO-DEGRADABLE COMPOSITES

(30) Priorité: 08.11.2007 FR 0758878
(43) Date de publication de la demande: 21.07.2010
(73) Titulaire: Valagro Carbone Renouvelable Poitou-Charentes, 86022 Poitiers Cedex (FR)
(72) Inventeur: BARBIER, Jacques, F-86360 Montamise (FR); DEVER, Cédric, F-86130 Jaunay-clan (FR); SOUM, Stéphane, F-86440 Migne-auxances (FR)
(74) Mandataire: Cenatiempo, Julie Adeline Anne
(86) Numéro de dépôt international: PCT/FR2008/052024
(87) Numéro de publication internationale: WO 2009/068805

(56) Documents cités:
- WO-A-94/28061
- WO-A-2004/101683
- WO-A-2007/060137
- US-B1- 6 193 991
- NADIA LJUNGBERG ET AL: "The effects of plasticizers on the dynamic mechanical and thermal properties of poly(lactic acid)" JOURNAL OF APPLIED POLYMER SCIENCE, JOHN WILEY AND SONS INC. NEW YORK, US, vol. 86, no. 5, 1 janvier 2002 (2002-01-01), pages 1227-1234, XP003002586 ISSN: 0021-8995
- NADIA LJUNGBERG ET AL: "Film Extrusion and Film Weldability of Poly(lactic acid) Plasticized with Triacetine and Tributyl Citrate" JOURNAL OF APPLIED POLYMER SCIENCE, JOHN WILEY AND SONS INC. NEW YORK, US, vol. 88, no. 14, 2003, pages 3239-3247, XP002483925

## Description

La présente invention se rapporte à l'utilisation d'un mélange citrate/lipide en tant que plastifiant de composites à base de polymère(s) biodégradable(s), chargé(s) en farine(s) végétale(s).

L'invention concerne également des composites à base de polymère(s) biodégradable(s) chargé(s) en farine(s) végétale(s), contenant un mélange citrate/lipide. L'expression "mélange citrate/lipide" telle qu'utilisée dans cette spécification, se réfère à un mélange d'un citrate avec un lipide.

On sait que les matériaux à biodégradabilité contrôlée sont de plus en plus recherchés, en particulier les matériaux aptes à se dégrader en milieu naturel, sans nécessiter d'apport spécifique de micro-organismes tels que les matériaux à base de mélanges de polymère(s) biodégradable(s) et de farine(s) végétale(s). Ces matériaux, à base de polymères biodégradables ou de mélanges de polymères biodégradables et de farines végétales, sont généralement utilisés par la mise en oeuvre de techniques de type injection, extrusion soufflage, extrusion gonflage, calandrage, etc., qui demandent une fluidité importante à l'état fondu.

Or, les mélanges polymères biodégradables chargés farines végétales présentent une fluidité faible à l'état fondu.

Une solution utilisée pour améliorer la fluidité de ces matériaux est de leur ajouter un plastifiant, par exemple un phtalate, un benzoate, un époxyde, etc., qui permet de générer un produit flexible, résistant et plus facile à manipuler. Toutefois les plastifiants actuellement employés dans l'industrie des polymères sont d'origine pétrochimique, non renouvelables, et ne sont pas biodégradables.

On se retrouve donc au final avec des matériaux qui ne sont pas écologiques et qui ne se dégradent pas entièrement.

Il existe donc un besoin pour un produit capable d'améliorer la fluidité à l'état fondu des polymères biodégradables et des formulations à base de polymères biodégradables, en conservant leurs propriétés mécaniques et leur caractère dégradable.

C'est ce à quoi répond la présente invention en proposant d'utiliser un mélange citrate/lipide en tant que plastifiant biodégradable de composites à base de polymère(s) biodégradable(s) chargé(s) farine(s) végétale(s). Préférentiellement, l'invention vise l'utilisation d'un mélange citrate/lipide en tant que plastifiant biodégradable pour améliorer la fluidité à l'état fondu de mélanges polymères biodégradables chargés farines végétales.

Le mélange citrate/lipide de l'invention est une combinaison du tri-n-butyle citrate et de l'acide stéarique.

Les éléments du mélange sont ajoutés aux composites à base de polymère(s) biodégradable(s) et/ou de polymère(s) biodégradable(s) chargé(s) farine(s) végétale(s).

L'invention concerne également des composites à base de polymère(s) biodégradable(s) et/ou de polymère(s) biodégradable(s) chargé(s) farine(s) végétale(s), comprenant du tri-n-butyle citrate et de l'acide stéarique.

Avantageusement, la présente invention permet d'obtenir des formulations à base de polymères biodégradables chargés en farine(s) végétale(s) présentant une fluidité à l'état fondu importante, tout en étant dégradables en milieu naturel et donc non néfastes pour l'environnement.

Ces formulations possèdent en outre des résistances thermiques importantes.

D'autres caractéristiques et avantages ressortiront de la description en détail de l'invention qui va suivre.

La présente invention vise donc l'utilisation d'au moins un mélange citrate/lipide en tant que plastifiant de composites à base de polymères biodégradables chargés en farine(s) végétale(s).

La composition comprenant du tri-n-butyle citrate et de l'acide stéarique selon l'invention est utilisée en tant que plastifiant pour des composites à base d'au moins un polymère biodégradable chargé en farine végétale.

A titre d'exemple, les polymères peuvent être choisis parmi :
- l'amidon et les mélanges d'amidon,
- les polypeptides,
- le polyvinylalcool,
- les polyhydroxyalkanoates, polydroxybutyrates et polyhydroxyvalerates,
- l'acide polylactique et les polylactates,
- la cellulose, et
- les polyesters.

Les farines végétales peuvent être choisies parmi :
- les farines céréalières amylacées, telles que les farines de blé, maïs ou seigle,
- les farines de protéines, telles que les farines de féverole, lupin, colza, tournesol, soja ou caséine, et
- les farines lignocellulosiques, telles que des fibres du bois, chanvre ou lin.

Un exemple de composite particulièrement adapté selon l'invention est un composite comprenant au moins un acide polylactique, au moins un polyhydroxyalkanoate, de la farine de blé, de bois ou de fibres végétales, et le mélange citrate/lipide.

Selon un mode de réalisation particulier, l'utilisation selon l'invention consiste à extruder au moins un mélange de polymères biodégradables, de farine végétale, de citrate et de lipide, à des températures comprises entre 50 et 250°C, plus particulièrement entre 150 et 200°C.

Avantageusement, les composites à base de polymères biodégradables éventuellement chargés en farine végétale obtenus selon l'invention présentent de bonnes propriétés mécaniques et une fluidité à l'état fondu.

Ils possèdent des résistances thermiques importantes, qui peuvent être supérieures à 100°C.

Les composites selon l'invention peuvent être utilisés dans différents domaines. Avantageusement, du fait de leur propriétés particulières, on peut les utiliser dans le domaine de la transformation par calandrage, le thermoformage ou de l'injection.

Ces caractéristiques peuvent être illustrées par l'exemple qui va suivre, réalisé sur des composites à base d'acide polylactique (PLA) chargé en farine de blé. Pour cet exemple :
- les caractéristiques en traction des matières plastiques ont été déterminées selon la norme ISO/R 527,
- l'indice de fluidité à l'état fondu des matières plastiques suit la norme ISO 1133, et
- la résilience des matériaux a été déterminée selon la norme ISO 179 à partir d'éprouvettes non entaillées.

Le protocole opératoire est le suivant.

Trois mélanges, notés A,B et C, contenant des proportions données de PLA, de farine de blé (Amo La Dorée, avec un taux d'humidité résiduel de 1%) et de tri-n butyle-citrate ont été extrudés à l'aide d'une extrudeuse corotative Clextral BC21 (L=600mm, L/d=24) à 170°C en présence de 0 ou 1 ou 2% en masse de lipides (acide oléique ou acide stéarique).

Les produits obtenus par granulation sont injectés sur une presse Arburg 100T afin de former des éprouvettes nécessaires à leurs caractérisations mécaniques et rhéologiques.

Les résultats obtenus sont présentés dans le tableau suivant qui indique les caractéristiques mécaniques et rhéologiques des produits A,B et C comparées à celles du PLA pur :

| Echantillon | | PLA | A | | | B | | | C | |
|---|---|---|---|---|---|---|---|---|---|---|
| Teneur massique en citrate dans le mélange (%) | | 0% | 8,7% | | | 8,7% | | | 10% | |
| Teneur massique et nature en lipide dans le mélange | | 0% | 0% | 2% * Acide oléique | 2% Acide stéarique | 0% | 1% * Acide oléique | 2% Acide stéarique | 0% | 2% * Acide oléique |
| MFR (2,16kg, 170°C) g/10min | | 4,3 | / | 17,6 | 17,9 | / | 5,4 | 13,2 | / | 4,3 |
| Resilience kJ/m² | | 15 | | | | | | | | |
| Flexion | Contrainte Max. MPa Module de flexion MPa | 92 | 32 | / | / | 36 | 29 | 27 | 22 | 15 |
| | | 3156 | 2036 | / | / | 2320 | 1545 | 1572 | 106 1 | 587 |
| Traction | Contrainte Max. MPa Allongement à la rupture Module de traction MPa | 27 | 19 | 11 | 13 | 23 | 16 | 14 | 10 | 7 |
| | | 3 | 2 | 2 | 2 | 2 | 4 | 4 | 75 | 85 |
| | | 1564 | 1550 | 1008 | 1437 | 1775 | 890 | 1044 | 907 | 377 |

| | | | | | | | | | | |
|---|---|---|---|---|---|---|---|---|---|---|
| * Comparatif | | | | | | | | | | |

On constate que la combinaison de citrate et de lipide permet de plastifier les composites A, B et C. En effet, par rapport au PLA seul, le mélange citrate/lipide selon l'invention permet d'améliorer la fluidité à l'état fondu des composites A, B et C à base de PLA chargé en blé, tout en rendant le matériau plus souple et donc plus facile à travailler.

Ces résultats montrent bien que le mélange citrate/lipide joue un rôle de plastifiant, tout en conservant les propriétés mécaniques du PLA, ainsi que son caractère dégradable en milieu naturel.

## Revendications

1. Utilisation d'un mélange d'un citrate avec un lipide (mélange citrate/lipide) en tant que plastifiant pour des composites à base de polymère(s) biodégradable(s) chargé(s) en farine(s) végétale(s), **le citrate étant le tri-n-butyle citrate et le lipide étant l'acide stéarique.**

2. Utilisation d'au moins un mélange citrate/lipide selon la revendication 1, pour améliorer la fluidité à l'état fondu des formulations à base de polymère(s) biodégradable(s) chargé(s) en farine(s) végétale(s).

3. Utilisation selon l'une des précédentes revendications, **caractérisée en ce qu'**elle consiste à extruder au moins un mélange de polymères biodégradables, de farine végétale, **de lipide et de** citrate à des températures comprises entre 50 et 250°C.

4. Utilisation selon l'une des précédentes revendications, **caractérisée en ce qu'**elle consiste à extruder au moins un mélange de polymères biodégradables, de farine végétale, **de lipide et** de citrate à des températures comprises entre 150 et 200°C.

5. Composite à base de polymère(s) biodégradable(s) chargé(s) en farine(s) végétale(s), **caractérisé en ce qu'**il comprend **du tri-n-butyle** citrate **et de l'acide stéarique.**

## Patentansprüche

1. Verwendung einer Citrat/Lipid-Mischung als Weichmacher für Verbundwerkstoffe auf der Grundlage eines (von) biologisch abbaubaren Polymers (Polymeren), mit (einem) pflanzlichen Mehlen (Mehl), wobei das Citrat ein Tri-n-butylcitrat und das Lipid eine Stearinsäure ist.

2. Verwendung von wenigstens einer Citrat/Lipid-Mischung nach Anspruch 1 zur Verbesserung der Fließfähigkeit im geschmolzenen Zustand der Formulierung auf der Grundlage eines (von) biologisch abbaubaren Polymers (Polymeren) mit (einem) pflanzlichen Mehlen (Mehl).

3. Verwendung nach einem der vorhergehenden Ansprüche, **dadurch gekennzeichnet, dass** diese im Strangpressen von wenigstens einer Mischung aus biologisch abbaubaren Polymeren, pflanzlichem Mehl, einem Lipid und einem Citrat bei Temperaturen zwischen 50°C und 250°C besteht.

4. Verwendung nach einem der vorhergehenden Ansprüche, **dadurch gekennzeichnet, dass** diese im Strangpressen von wenigstens einer Mischung aus biologisch abbaubaren Polymeren, pflanzlichem Mehl, einem Lipid und einem Citrat bei Temperaturen zwischen 150°C und 200°C besteht.

5. Mischung auf der Grundlage eines (von) biologisch abbaubaren Polymers (Polymeren) mit (einem) pflanzlichen Mehlen (Mehl), **dadurch gekennzeichnet, dass** diese Tri-n-butyl-citrat und Stearinsäure aufweist.

## Claims

1. Use of a mixture of a citrate with a lipid (citrate/lipid mixture) as a plasticizer for composites based on a biodegradable polymer or polymers containing plant flour or flours, the citrate being tri-n-butyl citrate and the lipid being stearic acid.

2. Use of at least one citrate/lipid mixture according to claim 1, for improving the fluidity in the molten state of formulations based on a biodegradable polymer or polymers containing plant flour or flours.

3. Use according to one of the preceding claims, **characterised in that** it consists of extruding at least one mixture of biodegradable polymers, plant flour, lipid and citrate at temperatures of between 50° and 250°C.

4. Use according to one of the preceding claims, **characterised in that** it comprises extruding at least one mixture of biodegradable polymers, plant flour, lipid and citrate at temperatures of between 150° and 200°C.

5. A composite based on a biodegradable polymer or polymers containing plant flour or flours, **characterised in that** it comprises tri-n-butyl citrate and stearic acid.
